# EUROPEAN PATENT APPLICATION

(11) **EP 2 418 554 A1**
(43) Date of publication of application: **15.02.2012**
(21) Application number: 10169503.9
(22) Date of filing: 02.08.2010
(51) Int. Cl.: G05B 19/048, G06F 3/048

(54) **Method and computer program products for enabling supervision and control of a technical system**

(71) Applicant: ABB Research Ltd., 8050 Zürich (CH); Timsjö, Susanne, 725 91 Västeräs (SE); Olausson, Martin, 724 82 Västeräs (SE)
(72) Inventor: TIMSJÖ, Susanne, 725 91, Västerås (SE); OLAUSSON, Martin, 724 82, Västerås (SE)
(74) Representative: Kock, Ina

(57) **Abstract**

The invention relates to a method for enabling supervision and control of a technical system, the method being implemented in a supervisory control system 70 comprising a display unit 71. The display unit 71 displays an HMI display view 10 over a process application of the technical system, the HMI display view 10 comprising one or more graphical process objects 21, 22, 23, 24, 25 representing physical process devices 11, 12, 13, 14, 15 of the process application of the technical system. The method comprises the steps of: providing 81, on the HMI display view 10, a visual reference 20; receiving 82 input signals indicating, in the visual reference 20, a selection of one of the graphical process objects 13; and in response to receiving said input signals outputting 83, in the HMI display view 10, one or more lens views 31, 32, 33, 34, 35, each of the lens views 31, 32, 33, 34, 35 corresponding to a particular type of information or functionality relating to the selected graphical process object 21, 22, 23, 24, 25. The invention further relates to computer program products.

## Description

### Field of the invention

The invention relates generally to the field of supervision, control and monitoring of technical systems or processes, and in particular to human-machine interfaces for such supervision, control and monitoring.

### Background of the invention

In a typical process industry comprising automated processes, such as petrochemical, chemical or pharmaceutical processing systems, pulp and paper production systems or power plants, there is a need to monitor various process variables and control the processes accordingly.

Supervision or monitoring of such technical systems is of great importance for ensuring proper functioning of the technical system and for enabling right action to be taken. It is important that the monitoring allows an operator to quickly detect any fault conditions and also to rapidly act upon such fault conditions.

The general task of supervision results in the same kind of problems for the operator, as described below, independently of if a system or a process is supervised, and the following description is therefore directed to processes alone but is applicable to systems as well.

The operator is supported in his or her task by a supervisory control system, which in the art is also known under the term SCADA (Supervisory Control and Data Acquisition) system. Such a supervisory control system interacts with the technical system via system interface units which units take measurements from process applications of the system or perform control actions on the system.

The supervisory control system typically comprises processing means to process the information coming from and going to the system interface units, data storing means to store measurements as well as data generated from the processing of measurements, such as alarms, statistical calculations etc. The supervisory control system further comprises human-machine interface (HMI) in the form of at least one operator terminal and communication means for signal transmission from and to the system interface units and for data transmission between the processing means, the data storing means and the human-machine interface.

It is inevitable that for large technical systems a huge amount of data is available for being displayed and needs to be monitored by the operator. A problem in that respect is how to best present the data as visual information to the operator.

The HMIs of the process applications in the process industry typically visualizes the process environment. The visualization includes representation of actual devices, e.g. tanks, pumps and valves. From the HMI, it is possible to supervise, control and view the functionality provided by these devices.

It is important for the operator to obtain a good overview of the overall process application in order to obtain situation awareness and information needed in a decision making process. An overview display view shown in the display unit may be provided to this end.

Detailed information relating to objects of the overview display view is also required for making well-founded decisions. However, the screen may be filled with too much information, making it hard for the operator to readily use the information. Further, information may be displayed on the screen irrespective of whether the operator needs the information or not. The overview display views comprise types of information that are only needed occasionally, such as trouble shooting information, alarm limits, navigation and interaction possibilities. All this information and functionality is often built into the graphic display views and is shown all the time.

In other cases, a disadvantage of currently used supervision systems is the need to perform several clicking operations in order obtain the desired detailed information. The detailed information is then viewed only when the operator chooses to view a "detailed data"-window from a context menu, which could entail a number of clicking operations.

Thus, for the supervision to be efficient a good overview picture is needed, as well as easily obtained detailed information.

In view of the above, a balanced trade-off between the overview requirement and the detailed information would be desirable.

### Summary of the invention

It is a general object of the invention to provide means and methods to improve the visual information presented in the supervision of a technical system, for overcoming or a least alleviating the above-mentioned drawbacks of the prior art.

It is a particular object of the invention to provide means and methods giving a good overview over a process application while simultaneously offering functionality and information on demand in an easily obtainable manner.

These objects, among others, are achieved by means of methods and computer program products as claimed in the independent claims.

In accordance with the invention, a method for enabling supervision and control of a technical system is provided. The method may be implemented in a supervisory control system comprising a display unit displaying an HMI display view over a process application of the technical system. The HMI display view comprises one or more graphical process objects representing physical process devices of the process application of the technical system that is being supervised and controlled. The method comprises the steps of: providing, on the HMI display view, a visual reference; receiving input signals indicating, in the visual reference, a selection of one of the graphical process objects; and in response to receiving the input signals outputting, in the HMI display view, one or more lens views, each of the lens views corresponding to a particular type of information or functionality relating to the selected graphical process object.

By means of the invention, a balanced trade-off between an overview picture of a process application and needed information and functionality thereof is provided. Different parts of the process application and how these parts are related to each other are, in accordance with the invention, shown in comprehensive manner and e.g. detailed information about the different parts can be easily be obtained by means of the lens views.

In accordance with an embodiment of the invention, the method comprises the further steps of: receiving input signals indicating a selection of one or more of the lens views; and in response to receiving the input signals, outputting in the HMI display view the particular type of information or functionality relating to the selected graphical process object corresponding to the selected lens views. A swift and easy way of obtaining functionality available for a particular process device or e.g. more detailed information about the particular process device is thus provided.

In accordance with another embodiment, the method comprises the additional steps of detaining, in the HMI display view, the output information or functionality that corresponds to the selected lens views, and repeating the steps of providing a visual reference, the step of receiving input signals indicating a selection of one of the graphical process objects, and the step of outputting the lens views. The operator is thus enabled to obtain information and/or functionality about different process devices and have them on the display screen simultaneously. The operator is thus able to readily e.g. compare different operational aspects of the technical system.

In accordance with yet another embodiment of the invention, the step of receiving input signals comprises receiving input signals from an operator of the supervisory control system, and the selection comprises the operator indicating by means of brackets a graphical process object. A user-friendly way of selecting which process devices to supervise or control is thus provided.

In accordance with still another embodiment of the invention, the method is set in an automatic mode and the step of receiving input signals then comprises receiving input signals from a process device of the technical system indicating an error state of the physical object, wherein the selection then comprises selection of a graphical process object corresponding to the process device, and wherein the step of outputting one or more lenses comprises outputting a lens most relevant for the error state. This feature provides an increased supervision and control of the technical system as the operator is rapidly informed about a failing process device or process step and can take appropriate action.

In accordance with still another embodiment of the invention, the step of outputting, in the HMI display view, one or more lens views, each of the lens views corresponding to a particular type of information or functionality relating to the selected graphical process object, comprises the sub-steps of: selecting one lens view, and outputting, in the HMI display view, sub-lenses of the selected lens view in a hierarchical manner. Yet additional relevant information about a certain process device can thereby be displayed in a convenient way. The operator is thus able to obtain vast amounts of information, and select only the information of interest.

The invention also comprises computer program products.

Further features and advantages thereof will become clear upon reading the detailed description in conjunction with the accompanying drawings.

### Brief description of the drawings

Figure 1 illustrates a screenshot of a way of presenting information about a process application in accordance with prior art.
Figure 2 illustrates a basic principle of the present invention.
Figure 3 illustrates a process of process automation.
Figure 4 illustrates an HMI display view of process automation in accordance with an embodiment of the present invention.
Figure 5 illustrates an activated visual reference in accordance with an embodiment of the invention.
Figure 6 illustrates different lenses in accordance with an embodiment of the invention.
Figure 7 illustrates a selected and activated graphical process object and its corresponding lens views.
Figures 8-10 illustrates different graphical process objects and lens views.
Figure 11 illustrates an expandable lens hierarchy.
Figure 12 illustrates a feature of the present invention.
Figure 13 illustrates implementation principles of the present invention.
Figure 14 illustrates a supervisory control system in accordance with the invention.
Figure 15 illustrates a flow chart over steps of a method in accordance with the present invention.

### Detailed description of embodiments of the invention

In the following, same reference numerals are used throughout the drawings for denoting same or corresponding parts.

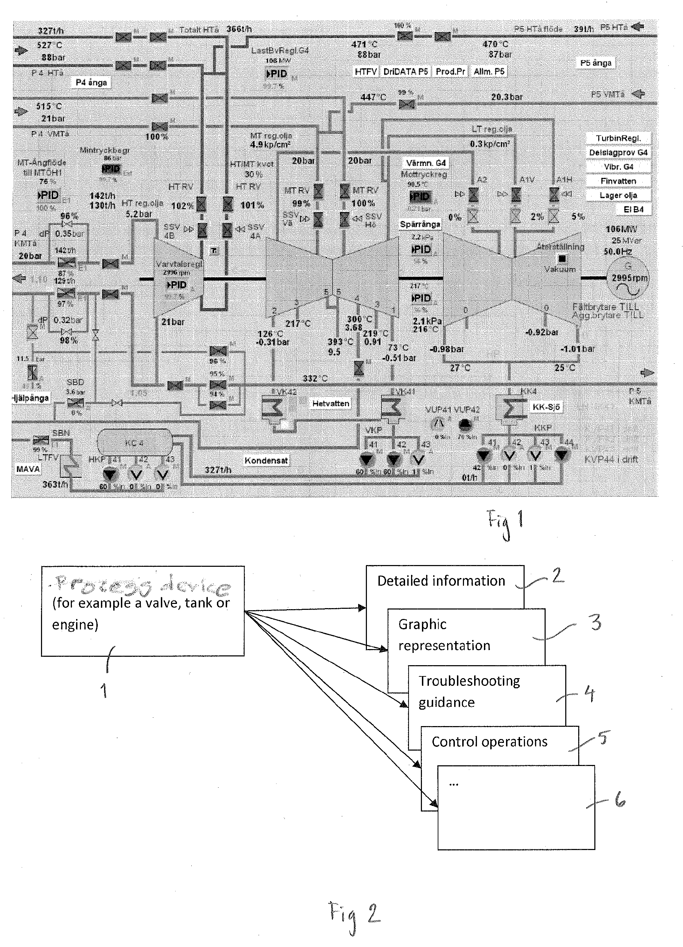

In order to provide a more thorough understanding of the invention, and for comparison, a known way of presenting data is illustrated in figure 1. Figure 1 shows a screenshot of a typical HMI display view over a process application that is being supervised by an operator. In particular, a typical SCADA overview is illustrated. As can be seen, there is a vast amount of information and functionality available, making it hard for the operator to obtain a good overview.

Briefly, in accordance with the present invention, different "lenses" in combination with a "magic sight" are provided. The different lenses refer to different types of information and functionality that a graphical object corresponding to a real device in the process industry provides. The magic sight is a visual reference tool that the operator uses to navigate and zoom into information and details that origin from that specific graphical object in the HMI application. The operator can rapidly change between the different lenses and combine them in order to get the specific information that he or she demands for making correct decisions about the operation of the industrial process.

By the provision of the magic sight the invention makes it possible for the operator to view details about a certain device as well as being able to control that device, while simultaneously viewing the overall process application on the screen.

An HMI application is an application used for controlling, monitoring and supervising a physical industrial process within a process industry comprising automated processes. The HMI application reflects a real process industry environment with the capabilities real devices provide.

Firstly, regarding the nomenclature used in the following: A process of the process industry is denoted process application. The process application is controlled, supervised and monitored by a process control system. The process control system in turn comprises a human-machine interface (HMI) constituting the user interface. Each device of the process application is mapped to a process control object. The process control objects are related to graphic representations shown in the HMI display view.

Figure 2 illustrates a part of the basic principles of the present invention. In particular, a device 1 used in a process application, for example a valve, a tank or an engine, may have different types of information and/or functionality relating to it. The information and/or functionality is, in accordance with the invention, viewed in different lenses, or lens views. The lens or lens view may comprise a square or otherwise designed space containing relevant information and/or functionality of the device 1. For example, the device 1 may have a graphic representation of itself, shown in graphic representation lens 2, detailed information such as object name, weight etc, shown in detailed information lens 3, trouble-shooting guidance, shown in trouble-shooting lens 4, and functionalities such as opening of a valve, illustrated in control operations lens 5. There are numerous examples of lens vies that could be provided; further examples of information comprise mechanical information, error states, etc. Such information is available for presentation in different lens views to the operator. This is just a few examples of types of information, and it is realized that there are numerous additional types of information that could be interesting for the operator, for example depending on the device at hand and the process industry in question.

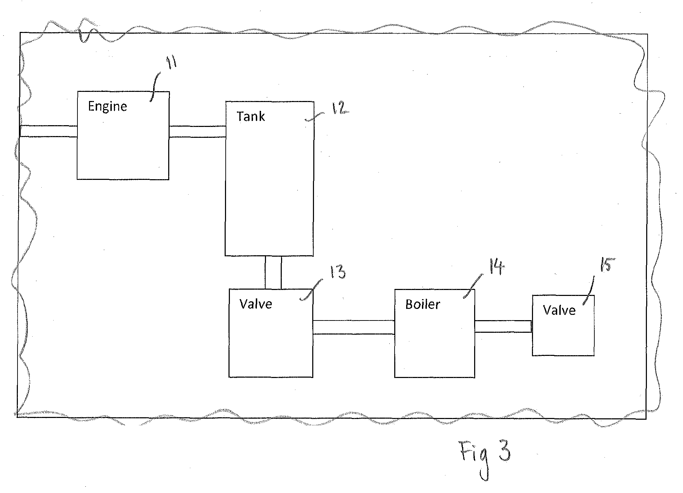

Figure 3 illustrates an exemplifying process automation which is being supervised and controlled by an operator. The process automation comprises process applications, in turn comprising different devices such as the illustrated engine 11, tank 12, first valve 13, boiler 14 and second valve 15. As a particular but non-exhaustive example, the invention is suitable for a SCADA system for the process automation domain.

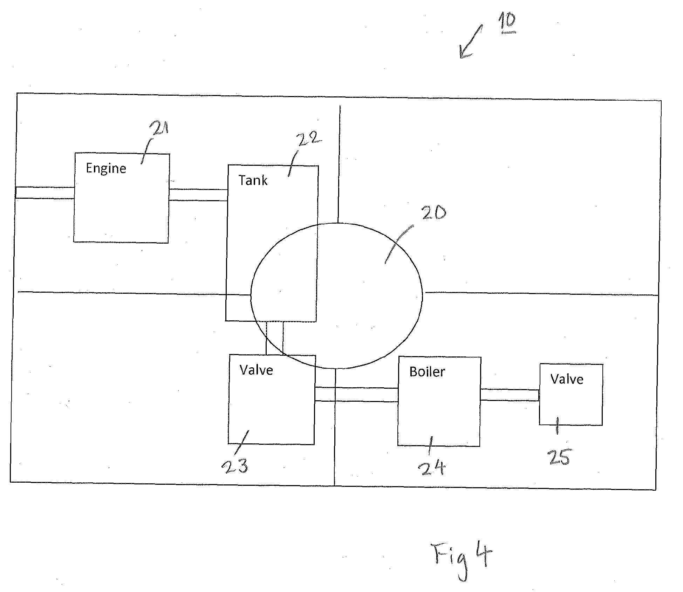

Figure 4 illustrates an HMI illustrating in a comprehensive HMI display view 10 the exemplifying process automation of figure 3. In accordance with the invention, the HMI display view 10 comprises a visual reference 20, or magic sight. By means of the visual reference 20, the operator may obtain information about the process application. The visual reference 20 may comprise a transparent or semi-transparent sight area that gets visible on top of the HMI display view 10 upon activation by the operator. The visual reference 20 may for example be a circular semi-transparent sight that can be moved over the HMI display view 10. The activation can be effectuated in different ways, for example by pressing a key on a keyboard.

The process application entails the use of a number of different physical devices as mentioned earlier, which devices 11, 12, 13, 14, 15 are mapped to a respective process control object represented by graphical objects 21, 22, 23, 24, 25 on the HMI display view 10. Such graphical objects 21, 22, 23, 24, 25 are in the following denoted graphical process objects. For example, the illustrated engine 11 (a physical object) of figure 3 is, in figure 4, depicted as the graphical process object 21.

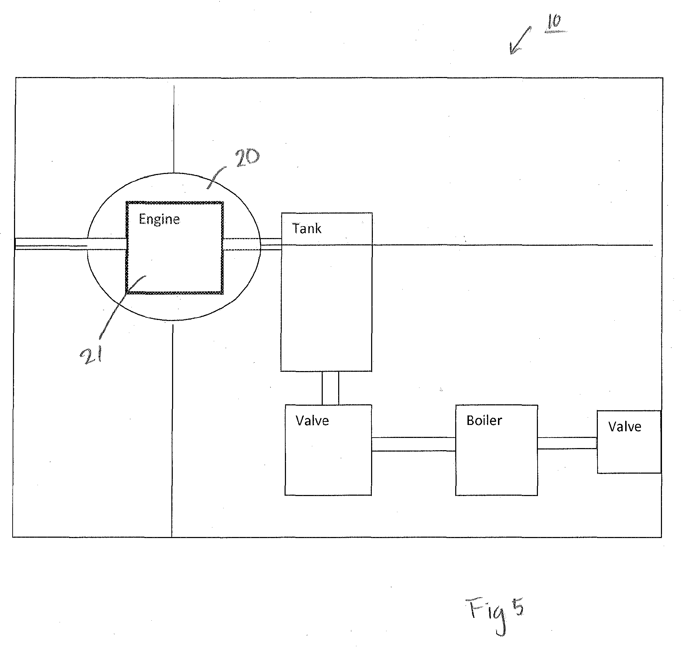

Figure 5 illustrates a step wherein the operator has activated and moved the visual reference 20 over the HMI display view 10, for example by means of moving a computer mouse. The maneuvering of the visual reference 20 by means of a mouse is a convenient way for the operator to perform the desired actions, but other ways are conceivable, for example by using a touch screen, different buttons, or a joystick etc.

The different graphical process objects 21, 22, 23, 24, 25 that have information available about them selves can be selected. The selection may, for example by, be performed by indicating the graphical process objects 21, 22, 23, 24, 25in the HMI display view 10 by lighting corners or brackets. Another example of how to indicate the graphical process object 21, 22, 23, 24, 25 of interest comprise the example illustrated in figure 5. That is, the visual reference 20 is moved over the HMI display view 10, and I in particular over the graphical process object of interest, in this case the engine 21. Once the visual reference 20 situated over the chosen graphical object, it becomes highlighted and can then be selected. It is noted that not all devices need to have information relating to them and graphical process objects corresponding to such device cannot be selected. Only graphical process objects that have such information available can be selected.

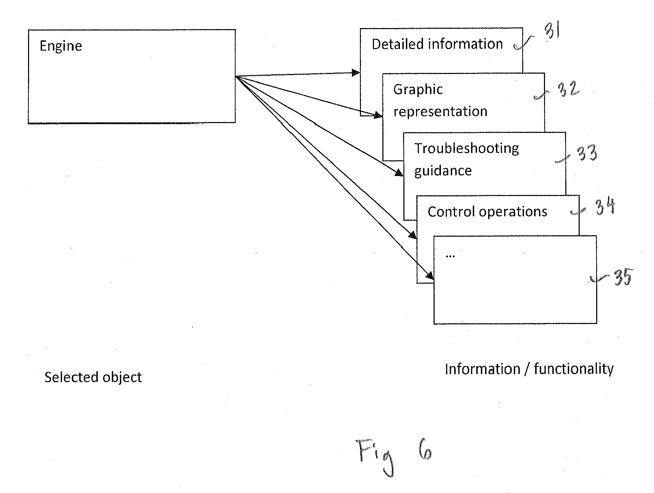

Figure 6 illustrates a step wherein available information about a particular chosen graphical process object is shown in different lenses 31 - 35. The activated graphical process object, in this case representing the engine 11, has several lenses 31 - 35 available, the lenses showing different types of information and/or functionality. The lenses 31 - 35 may be shown as buttons appearing on the screen, as a drop-down menu or as any other selectable items. The lenses 31 - 35 may comprise information and/or functionality such as detailed information 31, graphic representation 32, trouble-shooting guidance 33, control operations 34 or other information or functionality 35.

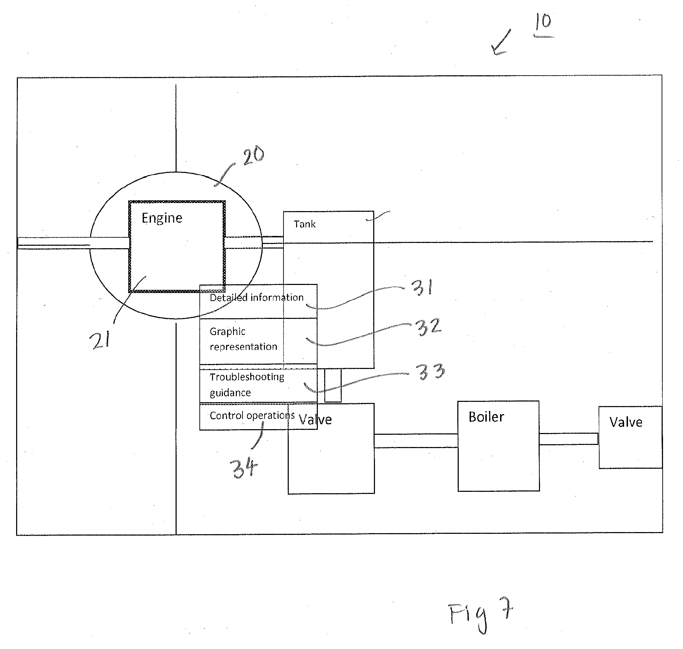

Figure 7 illustrates the engine 21 being chosen in the visual reference 20. Its corresponding lenses 31 - 34 comprising different types of information and functionality are also illustrated. From among the different lenses 31 - 34 the ones of interest may be chosen. This selection can be performed in different ways, for example by ticking a box (not illustrated) of the lens of interest or just by clicking on the lens. Upon selection of a lens, the visual reference 20 directly presents the information using that lens.

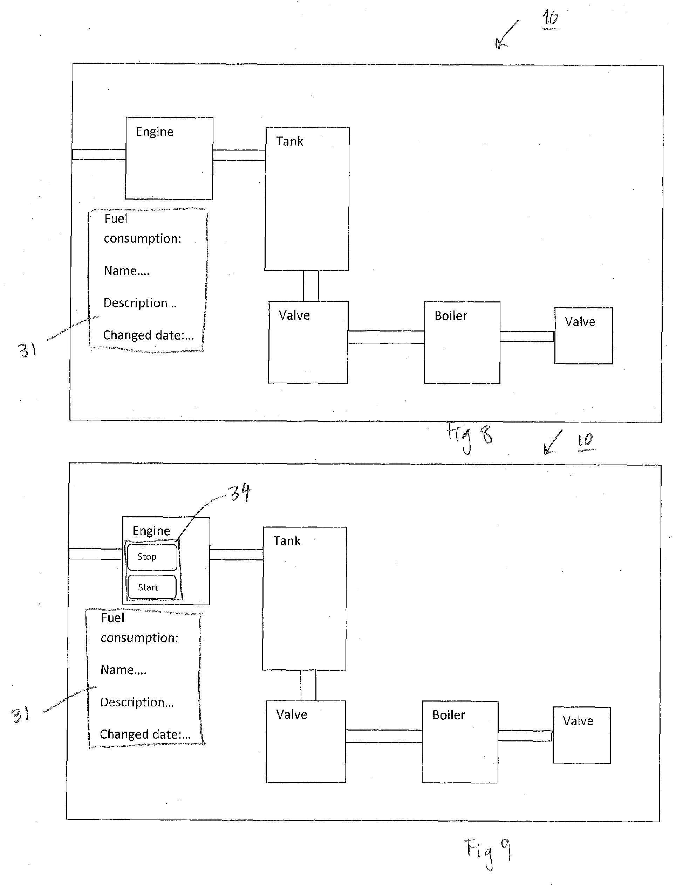

Figure 8 illustrates a view corresponding to the above, wherein the detailed information view 31 has been selected for view. The operator is then able to see detailed information of interest on the display, for example fuel consumption of the engine, name of the engine type, description etc.

Figure 9 illustrates another example, wherein the operator has selected both the detailed information view 31 and the control operations view 34. The operator is now able to see detailed information of interest and is also able to perform control actions such as stopping or starting the engine 21. The operator may choose one or more lenses for display and the information of all chosen lenses are then shown on the screen.

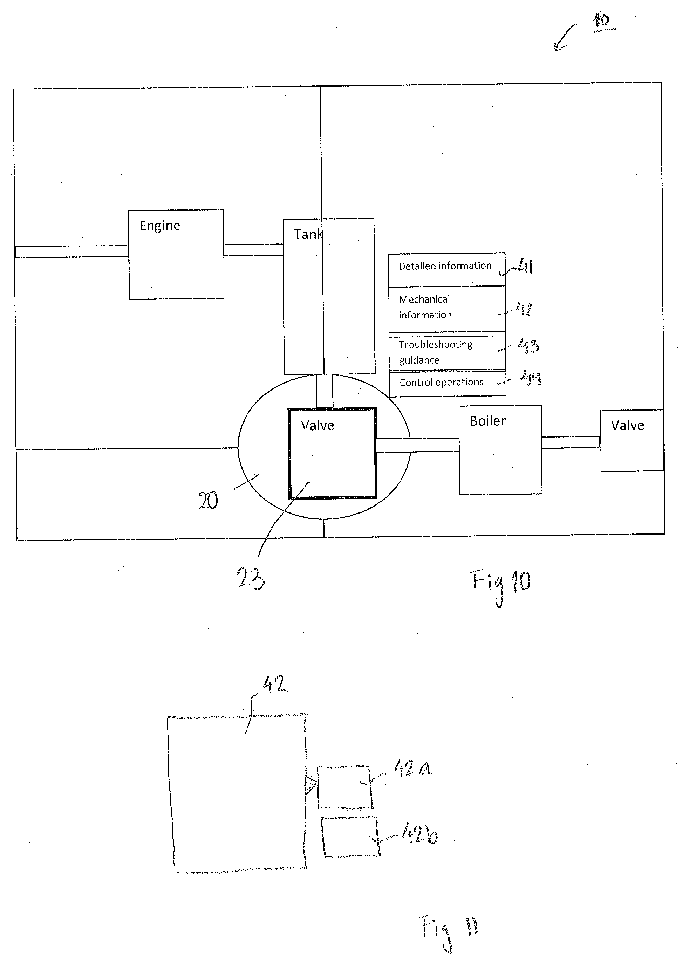

Figure 10 illustrates the first valve 23 being selected by the operator, and its corresponding available lenses 41, 42, 43, 44 being shown on the HMI display view 10.

As mentioned earlier, all graphical process objects that are shown on the screen do not have information relating to them and thus have no available lenses. Some graphical process objects, representing for example physical objects such as pipes, are only shown on the screen in order to make the HMI display view 10 more realistic and thereby more comprehensive.

Upon request by the operator, for example by pressing a key on a keyboard, selectable graphical process objects may be highlighted or indicated by lightning brackets. The operator is then aware of which graphical process objects that have information and/or functionality available in lenses, and thus can be selected.

In an embodiment of the invention, the lenses 31 - 35 themselves may provide additional lenses containing further information or functionality. For example, if the mechanical information lens is activated, it can provide a lens such as a mechanical drawing and/or other information that would be of interest for the operator to see in combination with the information of the mechanical information lens.

Figure 11 illustrates an example of the above feature of an expandable lens hierarchy. In particular, lens 42 may provide additional lenses 42a and 42b, which in turn may be chosen by the operator. The content of lens 42 may already be shown on the screen and upon selection by the operator, the contents of a chosen lens 42b appears on the screen and the additional information provided by the chosen lens 42b can be studied by the operator. As another example, an error state lens may have sub-lenses that are available through it. Such sub-lenses to the error state lens may provide the operator trouble shooting guidance and detailed information about an error.

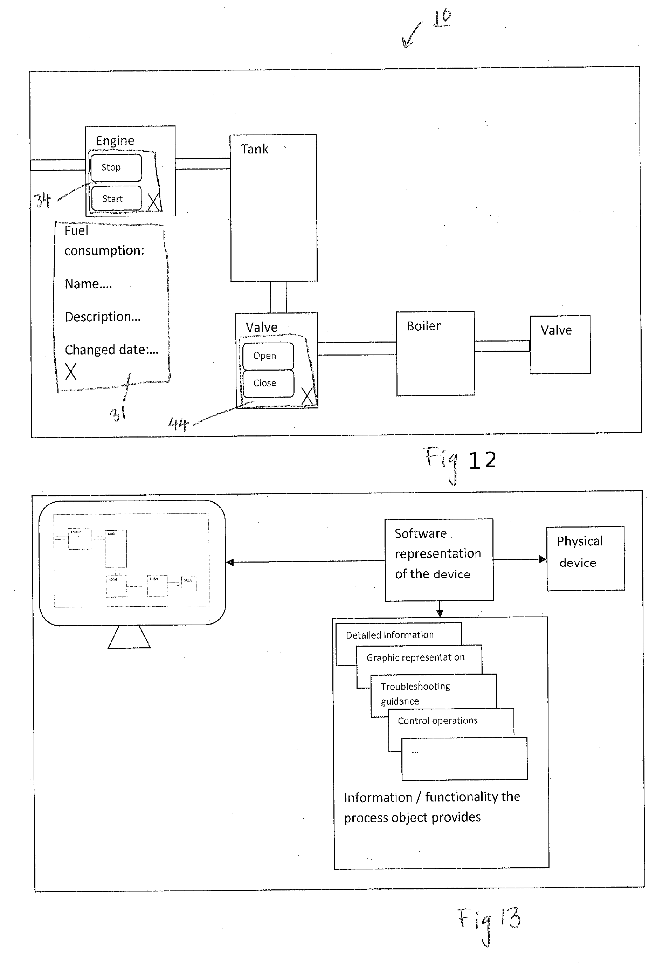

Figure 12 illustrates yet another embodiment of the invention. In particular, when different lens views 31, 34, 44 provided on the HMI display view 10 are no longer of interest for the operator, they should be easy to remove. This can be accomplished for example by providing well-known crosses on which the operator simply clicks with a computer mouse, whereupon the lens views are closed.

In accordance with an embodiment of the invention, the information and functionality provided by the lenses are only active when the visual reference 20 is activated on the graphical process object. Once another graphical process object is selected by means of the visual reference 20, the related lenses and their information or functionality disappear.

In accordance with another embodiment of the invention, the information provided by a particular lens is provided even when the visual reference 20 is switched off. This feature can be implemented for example by "pinning" the lens information view of interest. The information and functionality provided by the graphical process object is then activated even when the visual reference 20 is deactivated. The information or functionality of the "pinned" lens will not disappear when the user deactivates the corresponding graphical process object the visual reference 20, and the operator may now select another graphical process object by once more activating the visual reference 20. The information or functionality provided by lenses for this selected graphical process object may be shown on the screen simultaneously with the already available and pinned information.

In another embodiment of the invention, the "magic sight" or visual reference 20 provided is run in an automatic mode. In the automatic mode, the visual reference 20 will automatically focus on a graphical process object when something with a certain level of priority occurs. For example, is an alarm with high priority goes off and that demands action from the operator, the automatic mode automatically provides a relevant autofocus on the graphical process object that represent the physical object that triggered the alarm. Based for example on the type of alarm, the visual reference automatically selects the lens having information that is most relevant the situation. The operator is thereby able to quickly and without any navigation in the HMI application take appropriate action.

As an example on the above automatic mode, an alarm triggered by a burning engine, the engine being a physical object, results in that the visual reference 20, set in the automatic mode, shows an error state lens. The error state lens information is informing the operator of which engine is burning, and the cause of the fire. The error state lens also has selectable lenses, from which trouble shooting lens is selected automatically. The trouble shooting lens provides relevant information and functionalities such as means for stopping the process, and information about the need to evacuate the building and possibly about emergency exits. Further, a sub-hierarchic lens providing a trouble shooting guidance for correcting the problem may be provided. Further information and/or functionality may also be provided.

It is noted that the information provided by the different lenses is not limited to 2D (two dimensions), and that if an activated graphical process object returns information to be presented in for example 3D (three dimensions), then the information will be presented in 3D.

It is further noted that the invention is applicable to any process application or technical system that needs to be controlled, supervised and/or monitored.

Figure 13 illustrates the inventive way of extracting data for viewing in accordance with the invention. When the operator has selected a lens for a process object, the graphical process object is asked to return the information that the detailed lens should present to the operator. In particular, the physical process device is represented as an object in the software. The software object is built up with the different aspects that form the functionality and behavior of that particular device. For example, the software object could be built up by a graphical representation, details about itself, a mechanical presentation, trouble-shooting information, control logic, and yet additional information related to the device. The different lenses for the activated graphical process objects representing process control objects, in turn representing real devices, is populated from the different functionality and information that the device may provide.

The present invention thus presents a new way of extracting detailed data from HMI applications used in the process industry. The inventors of the present invention have noted a way of taking advantage of underlying object oriented data of today's HMI applications, not being taken advantage of in known prior art solutions. The underlying object oriented data are applied in the HMI applications to provide easy navigation and to provide a user-friendly system.

The invention may be implemented in a supervisory control system 70 for controlling and supervising a technical system, such as for example a process industrial production or power transmission network. The supervisory control system 70 comprises at least one display unit 71 on which the above described HMI display views may be displayed. The supervisory control system 70 further comprises a computer 72 or other processing means, in turn comprising means 73 for performing the actions as described. The invention may be implemented in software, hardware or firmware or any combination thereof.

With reference to figure 16, the invention comprises a method 80 that enables supervision and control of a technical system. The method 80 is implemented in the supervisory control system 70 as described above, comprising the display unit 71 showing the HMI display view 10 comprising one or more graphical process objects 21-25 representing physical process devices 11-15 of the process application of the technical system being supervised and/or controlled.

In an embodiment, the method 80 comprises the first step of providing 81, on the HMI display view 10, a visual reference 20. The method 80 comprises the second step of receiving 81 input signals that indicates, in the visual reference 20, a selection of one or more of the graphical process objects 21-25. The method 80 comprises the third step of in response to receiving the input signals outputting 83, in the HMI display view 10, one or more lens views 31, 32, 33, 34, 35, each of the lens views 31, 32, 33, 34, 35 corresponding to a particular type of information or functionality relating to the selected graphical process object 21-25.

The method 80 may comprise further steps, a few of which are described in the following.

In an embodiment, the method 80 comprises the further steps of receiving input signals indicating a selection of one or more of the lens views, and in response to receiving the input signals, outputting in the HMI display view 10 the particular type of information relating to the selected graphical process object 21-25 corresponding to the selected lens views 31-35.

In another embodiment, the method 80 comprises the further steps of detaining, in the HMI display view 10, the output information corresponding to the selected lens views, and repeating the steps of providing a visual reference 20, the step of receiving input signals indicating a selection of one of the graphical process objects 21, 22, 23, 24, 25, and the step of outputting the lens views.

In yet another embodiment, the step of receiving input signals comprises receiving input signals from an operator of the supervisory control system 70. The selection then comprises the operator indicating by means of the lightning brackets or the like a graphical process object 21, 22, 23, 24, 25.

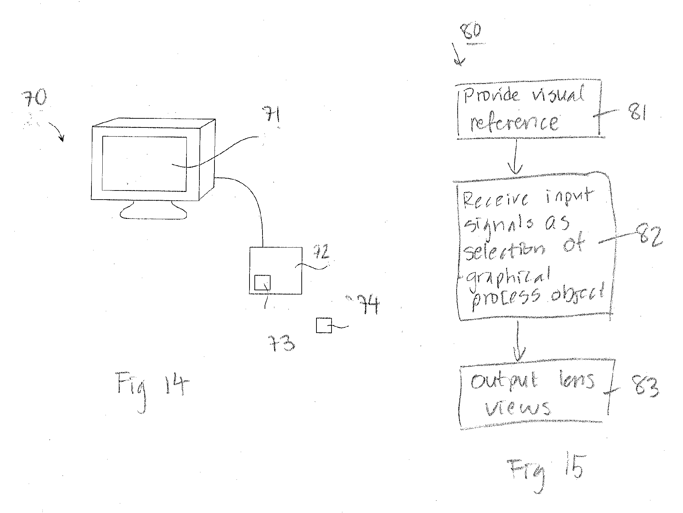

In still another embodiment, the method is set in the automatic mode and the step of receiving input signals then comprises receiving input signals from a physical object of the technical system indicating an error state of the physical object, the selection comprises selection of a graphical process object 21, 22, 23, 24, 25 corresponding to the physical object 11, 12, 13, 14, 15, and wherein the step of outputting one or more lenses comprises outputting a lens most relevant for the error state. Earlier in the description and with reference to figure 14, an example of this feature was given, in the form of the burning engine.

In yet another embodiment, the step of outputting, in the HMI display view 10, one or more lens views 31, 32, 33, 34, 35 comprises the sub-steps of: selecting one lens view 33, and outputting, in the HMI display view 10, sub-lenses 33a, 33b of the selected lens view 33 in a hierarchical manner.

The invention may be implemented in different technical systems. In particular, the method in accordance with the invention may be implemented in the supervisory control system 70 supervising such technical systems by adding suitable computer program product 73, for example stored on a computer readable medium such as a compact disc or floppy diskette, indicated schematically in figure 15 at 74. The method 80 of the present invention can thus be implemented as a computer program product 73, which is loadable e.g. into the computer 72 of the supervisory control system 70. The computer program product 73 comprises software code portions for performing the method when the product is run on the computer 72.

The invention thus also encompasses the computer program product 73. For example, the computer 72 comprises means for receiving the computer readable medium 74 and means for executing the computer program product 73 for carrying out the steps of: providing, on the HMI display view 10, a visual reference 20; receiving input signals indicating, in the visual reference 20, a selection of one of the graphical process objects 21, 22, 23, 24, 25; and in response to receiving the input signals outputting, in the HMI display view 10, one or more lens views 31, 32, 33, 34, 35, each of the lens views 31, 32, 33, 34, 35 corresponding to a particular type of information relating to the selected graphical process object 13. Further related steps may also be implemented by means of the computer program product 73.

## Claims

1. A method for enabling supervision and control of a technical system, said method being implemented in a supervisory control system (70) comprising a display unit (71), said display unit (71) displaying an HMI display view (10) over a process application of said technical system, said HMI display view (10) comprising one or more graphical process objects (21, 22, 23, 24, 25) representing physical process devices (11, 12, 13, 14, 15) of said process application of said technical system, the method comprising the steps of:
- providing (81), on said HMI display view (10), a visual reference (20),
- receiving (82) input signals indicating, in said visual reference (20), a selection of one of said graphical process objects (21, 22, 23, 24, 25), and
- in response to receiving said input signals outputting (83), in said HMI display view (10), one or more lens views (31, 32, 33, 34, 35), each of said lens views (31, 32, 33, 34, 35) corresponding to a particular type of information or functionality relating to said selected graphical process object (21, 22, 23, 24, 25).

2. The method as claimed in claim 1, comprising the further steps of:
- receiving input signals indicating a selection of one or more of said lens views (31, 32, 33, 34, 35), and
- in response to receiving said input signals, outputting in said HMI display view (10) said particular type of information or functionality relating to said selected graphical process object (21, 22, 23, 24, 25) corresponding to said selected lens views (31, 32, 33, 34, 35).

3. The method as claimed in claim 2, comprising the further steps of:
- detaining, in said HMI display view (10), said output information or functionality corresponding to said selected lens views, and
- repeating said steps of providing a visual reference (20), said step of receiving input signals indicating a selection of one of said graphical process objects (21, 22, 23, 24, 25), and said step of outputting said lens views.

4. The method as claimed in any of the preceding claims, wherein said step of receiving input signals comprises receiving input signals from an operator of said supervisory control system (70), and said selection comprises said operator indicating by means of brackets a graphical process object (21, 22, 23, 24, 25).

5. The method as claimed in any of the preceding claims, wherein said method is set in an automatic mode and wherein said step of receiving input signals then comprises receiving input signals from a physical device (11, 12, 13, 14, 15) of said technical system indicating an error state of said physical device (11, 12, 13, 14, 15), said selection comprises selection of a graphical process object (21, 22, 23, 24, 25) corresponding to said physical device (11, 12, 13, 14, 15), and wherein said step of outputting one or more lenses comprises outputting a lens most relevant for the error state.

6. The method as claimed in any of the preceding claims, wherein the step of outputting (83), in said HMI display view (10), one or more lens views (31, 32, 33, 34, 35), each of said lens views (31, 32, 33, 34, 35) corresponding to a particular type of information or functionality relating to said selected graphical process object (21, 22, 23, 24, 25), comprises the sub-steps of:
- selecting one lens view (42), and
- outputting, in said HMI display view (10), sub-lenses (42a, 42b) of said selected lens view (42) in a hierarchical manner.

7. The method as claimed in any of the preceding claims, wherein said visual reference (20) comprises a semi-transparent sight area.

8. A computer program product (73) loadable into a computer (71) of a supervisory control system (70), comprising software code portions for carrying out the method as claimed in any of claims 1-7 when said product is run on said computer (71).

9. A computer program product (73) stored on a computer readable storage medium (74), comprising computer readable program code means for causing a computer (71) of a supervisory control system (70), to carry out the method as claimed in any of claims 1-7.
